Europäisches Patentamt

(19) European Patent Office

Office européen des brevets

(11) Veröffentlichungsnummer: **0 197 550**

**B1**

(12) **EUROPÄISCHE PATENTSCHRIFT**

(45) Veröffentlichungstag der Patentschrift:
17.01.90

(21) Anmeldenummer: 86104812.2

(22) Anmeldetag: 08.04.86

(51) Int. Cl. ⁴: **B 29 C 47/60**

(54) Schnecke für Einschneckenextruder.

(30) Priorität: 10.04.85 BG 69680/85

(43) Veröffentlichungstag der Anmeldung:
15.10.86 Patentblatt 86/42

(45) Bekanntmachung des Hinweises auf die Patenterteilung:
17.01.90 Patentblatt 90/03

㊴ Bennante Vertragsstaaten:
DE FR GB IT SE

(56) Entgegenhaltungen:
GB-A-2 076 728

(73) Patentinhaber: VISH CHIMIKO-TECHNOLOGITCHESKI INSTITUT
8 Boul. Kl. Ohridski
Sofia (BG)

(72) Erfinder: Natov, Miltcho Angelov
Quartal Simeonovo Kiselitza-Str. 11
Sofia (BG)
Erfinder: Vassileva, Stefanka Vassileva
Komplex Mladost Bl. 14-2
Sofia (BG)

(74) Vertreter: Finck, Dieter
Patentanwälte v. Füner, Ebbinghaus, Finck
Mariahilfplatz 2 & 3
D-8000 München 90 (DE)

**Beschreibung**

Die Erfindung betrifft eine Schnecke für Einschneckenextruder mit einer kegelförmigen Speisezone, die in eine Dekompressionszone übergeht, auf die eine Kompressionszone folgt (GB-A-2 076 782).

Solche Schnecken werden für die Extruderverarbeitung von pulverförmigen, hochdispersen oder granulierten Polymerwerkstoffen mit großem Schüttvolumen verwendet.

Es ist bereits eine Schnecke für Einschneckenextruder mit einer kegelförmigen Speisezone bzw. Einzugszone und einer zylindrischen Kompressionszone bekannt, bei welcher der Steigungswinkel ihrer Schraubenlinie konstant ist (SU-A-2 62 376, IT-A-3 86 688).

Bekannt ist weiterhin eine Schnecke für Einschneckenextruder, welche eine Dekompressionszone aufweist, die in der Kompressionszone angeordnet ist. Bei ihr ist der Steigungswinkel der Schraubenlinie konstant und liegt in den Grenzen von 17° bis 27°, das Kompressionsverhältnis entlang der Schnecke ist ebenfalls konstant und liegt zwischen 1,5 und 5 (Rornev R.W. Teoretitscheskie osnovy pererabotki polimerov, Moskau, 1977, Seiten 312 - 313).

Nachteilig ist bei den bekannten Schnecken der kleine Durchmesser des Schneckenkerns am Beginn der Speisezone, wo die Kräfte am größten sind und wo am häufigsten ein Reißen der Schnecke auftritt, das Fehlen der Kompression bei Außermittigkeit des Speisebereichs der Schnecke und des zugehörigen Außenzylinders, das Fehlen einer Dekompressionszone bzw. Kompressionsentlastungszone am Anfang der Kompressionszone, die für das Entlüften der Formmasse erforderlich ist, der nicht optimale Steigungswinkel der Schneckenschraubenlinie und der Kompressionsverhältnisse in der Speise- und Kompressionszone, so daß die Produktivität gering ist, die schwierige Demontage der Schnecke vom Außenzylinder und daß sie nicht für das direkte Verarbeiten von pulverförmigen Werkstoffen ohne Vorgranulierung geeignet sind.

Die der Erfindung zugrunde liegende Aufgabe besteht deshalb darin, die Schnecke der eingangs genannten Art so auszubilden, daß unter Wahrung einer schnellen und einfachen Demontage und bei direkter Beschickung mit pulverförmigem Werkstoff ohne Vorgranulierung mit hoher Produktivität fehlerfreie große Erzeugnisse hergestellt werden können.

Diese Aufgabe wird bei der Schnecke der eingangs genannten Art dadurch gelöst, daß das Kompressionsverhältnis in der Speisezone der Schnecke bei einem Steigungswinkel der Schraubenlinie von 15° bis 23° größer als vier ist, daß die Dekompression in der Dekompressionszone 1,5 bis 2,0 beträgt und daß das Kompressionsverhältnis in der Kompressionszone bei einem Steigungswinkel der Schraubenlinie der Schnecke von 25° bis 32° kleiner als 4,5 ist. Dabei kann die Kompressionszone der Schnecke zylindrisch ausgebildet sein oder sich in ihrer Förderrichtung konisch verjüngen.

Bei der erfindungsgemäßen Schnecke befindet sich der kleinste Steigungswinkel der Schraubenlinie der Schnecke im Speisebereich des Extruders. Dies ermöglicht beim Drehen der Schnecke das leichte Aufnehmen von pulverförmigen, hochdispersen und anderen Werkstoffen mit großem Schüttvolumen. Da das Kompressionsverhältnis der Schnecke in der Speisezone groß ist, sind ein hoher Verdichtungsgrad und Entgasungsgrad des Werkstoffs erreichbar. Der größte Steigungswinkel der Schraubenlinie der Schnecke liegt in der Ausstoßzone, wodurch eine maximale Produktivität des Extruders gewährleistet wird und Erzeugnisse mit grossem Querschnitt hergestellt werden können. Das Vorhandensein einer Dekompressionszone und gegebenenfalls einer Vakuumzone erlaubt ein Abtrennen von im Werkstoff enthaltener oder bei der Verarbeitung abgetrennter Luft, Feuchtigkeit und anderer flüchtiger Substanzen. Weiterhin kann das Arbeitsvolumen des Schraubenkanals der Schnecke in der Speisezone des Extruders entsprechend dem Schüttvolumen des verarbeiteten Werkstoffs vergrößert werden. Dabei lassen sich das Kompressionsverhältnis der Schnecke in der Kompressionszone des Extruders in Abhängigkeit von der Änderung des spezifischen Volumens des Werkstoffs beim Schmelzen und der gewünschte Grad der zusätzlichen Homogenisierung durch Erzeugung eines unterschiedlichen Rückflusses variieren.

Die Demontage der Schnecke aus dem Außenzylinder ist schnell und effektiv durchführbar, was besonders wichtig ist im Falle der möglichen duroplastischen räumlichen Vernetzung der Formmasse während des Extrudierens. Schließlich können auch die Scherkräfte und entsprechend die Verweilzeit des Werkstoffs im Extruder in weitem Rahmen reguliert werden, was bei der Verarbeitung von thermostabilen Polymer-Formmassen von besonderer Bedeutung ist.

Anhand der Zeichnung werden Ausführungsbeispiele der Erfindung näher erläutert. Es zeigt:

Fig. 1    eine    erste    Ausführungsform    der Schnecke und

Fig. 2    eine    zweite    Ausführungsform    der Schnecke.

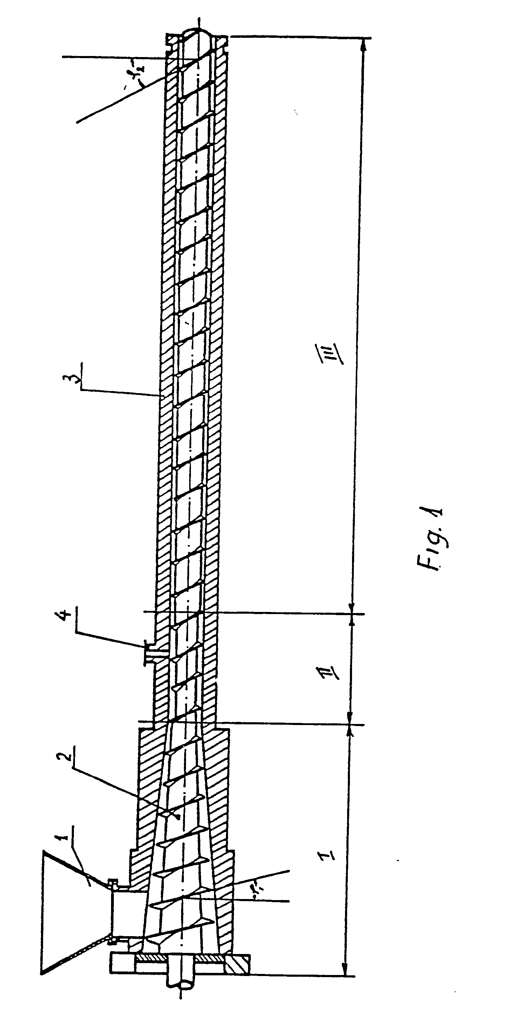

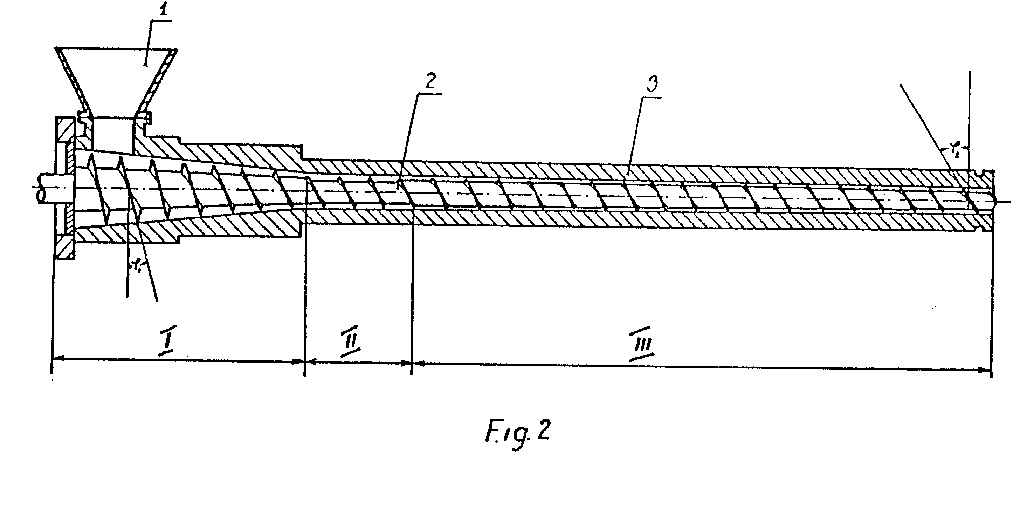

Die in Fig. 1 und 2 gezeigte Schnecke 2 für Einschneckenextruder hat eine kegelförmige Speisezone I, daran anschließend eine Dekompressionszone II und darauf folgend eine Kompressionszone III. Das Kompressionsverhältnis in der Speisezone I ist bei einem Steigungswinkel $\varphi_1$ der Schraubenlinie der Schnecke 2 von 15° bis 23° größer als vier. Die Kompressionsentlastung in der Dekompressionszone II reicht von 1,5 bis 2,0. Der Kompressionsgrad in der Kompressionszone II ist bei einem Steigungswinkel $\varphi_2$ der Schraubenlinie der Schnecke 2 von 25° bis 32° kleiner als 4,5.

Das Kompressionsverhältnis in der den ersten Bereich der Schnecke bildenden Speisezo-

ne I wird durch den größeren Durchmesser der Schnecke 2 und die größere Kanaltiefe am Anfang der Speisezone I im Vergleich mit dem Durchmesser der Schnecke 2 und der Kanaltiefe am Ende der Speisezone I bestimmt.

Der zweite Bereich der Schnecke 2 wird von der Dekompressionszone II, einer Übergangszone und der Kompressionszone III gebildet. Er hat eine wesentlich kleinere Änderung des Durchmessers, der im Falle einer zylindrischen Kompressionszone III unverändert bleibt. In der Dekompressionszone II ist die Tiefe des Schraubenkanals größer. Die Dekompressionszone II kann mit einer Öffnung 4 im Außenzylinder 3 für das Absaugen von bei der Einspeisung mitgerissenen oder bei der Verarbeitung abgetrennten gasförmigen Produkten verbunden sein. Das Kompressionsverhältnis in der Kompressionszone III beträgt 1,5 bis 4,5 und erstreckt sich bei der Verarbeitung von Hart-Polyvinylchlorid von 2,7 bis 3,1, bei Weich-Polyvinylchlorid von 3,0 bis 3,5, bei Polyäthylen hoher Dichte von 3,70 bis 4,35, bei Polyäthylen niedriger Dichte von 4,00 bis 4,50, bei Polypropylen von 3,70 bis 4,35, bei Polyamid und Polystyrol von 4,00 bis 4,35. Am Anfang des Außenzylinders 3 ist ein Speisebunker 1 angeordnet.

Bei der in Fig. 1 gezeigten Ausführung ist die Kompressionszone III zylindrisch, bei der in Fig. 2 gezeigten kegelförmig.

Vom Bunker 1 wird der Polymerwerkstoff in die Speisezone I eingeführt. Aufgrund der Drehung der Schnecke 2 im Außenzylinder 3 nimmt der Schneckensteg den Polymerwerkstoff vom Bunker 1 auf und fördert ihn in dem Schraubenkanal der Schnecke 2 vorwärts. Der Polymerwerkstoff wird dabei infolge der Verkleinerung des Kanalquerschnitts verdichtet. In der Dekompressionszone II werden aus dem Polymerwerkstoff die mitgerissene Luft, die Feuchtigkeit und andere gasförmige Produkte abgetrennt, wonach der Polymerwerkstoff infolge der Schraubenwirbelung komprimiert und homogenisiert und dann zum Formwerkzeug am Ende des Außenzylinders 3 ausgedrückt wird.

**Patentansprüche**

1. Schnecke für Einschneckenextruder, mit einer kegelförmigen Speisezone (I), die in eine Dekompressionszone (II) übergeht, auf die eine Kompressionszone (III) folgt, dadurch *gekennzeichnet*, daß das Kompressionsverhältnis in der Speisezone (I) der Schnecke (2) bei einem Steigungswinkel ($\varphi_1$) der Schraubenlinie von 15° bis 23° größer als vier ist, das die Dekompression in der Dekompressionszone (II) 1,5 bis 2,0 beträgt und daß das Kompressionsverhältnis in der Kompressionszone (III) bei einem Steigungswinkel ($\varphi_2$) der Schraubenlinie der Schnecke (2) von 25° bis 32° kleiner als 4,5 ist.

2. Schnecke nach Anspruch 1, dadurch *gekennzeichnet*, daß die Kompressionszone (III) der Schnecke (2) zylindrisch ist.

3. Schnecke nach Anspruch 1, dadurch *gekennzeichnet*, daß sich die Kompressionszone (III) der Schnecke (2) in ihrer Förderrichtung konisch verjüngt.

**Claims**

1. Screw for a single screw extruder, with a conically shaped feed zone (I) which undergoes transition into a decompression zone (II) which is followed by a compression zone (III), characterised in that the compression ratio in the feed zone (I) of the screw (2) is greater than four, with a pitch angle ($\varphi_1$) to the screw line of 15° to 23°, that the decompression in the decompression zone (II) amounts to 1.5 to 2.0 and that the compression ratio in the compression zone (III) is less than 4.5 with a pitch angle ($\varphi_2$) to the screw line of the screw (2) of 25° to 32°.

2. Screw according to claim 1, characterised in that the compression zone (III) of the screw (2) is cylindrical.

3. Screw according to claim 1, characterised in that the compression zone (III) of the screw is conically tapered in its forward region.

**Revendications**

1. Vis sans fin pour une extrudeuse à vis unique, comportant une zone d'alimentation conique (I) qui se transforme en une zone de décompression (II) suivie d'une zone de compression (III), caractérisée en ce que le taux de compression dans la zone d'alimentation (I) de la vis sans fin (2), pour un angle d'inclinaison ($\varphi_1$) de l'hélice allant de 15° à 23°, est supérieur à 4, en ce que la décompression dans la zone de décompression (II) a une valeur de 1,5 à 2, et en ce que le taux de compression dans la zone de compression (III), pour un angle d'inclinaison ($\varphi_2$) de l'hélice de la vis sans fin (2) allant de 25° à 32°, est inférieur à 4,5.

2. Vis sans fin selon la revendication 1, caractérisée en ce que la zone de compression (III) de la vis sans fin (2) est cylindrique.

3. Vis sans fin selon la revendication 1, caractérisée en ce que la zone de compression (III) de la vis sans fin (2) va en s'effilant dans sa direction de transport.

Fig. 1

EP 0 197 550 B1

Fig. 2

EP 0 197 550 B1